# FASCICULE DE BREVET EUROPEEN

(11) **EP 0 619 062 B1**
(45) Date de publication et mention de la délivrance du brevet: **24.11.1999**
(21) Numéro de dépôt: 94420108.6
(22) Date de dépôt: 31.03.1994
(51) Int. Cl.: A01C 1/06

(54) **Semences marquées aux terres rares**
Mit seltenen Erden markierte Samen
Seeds labelled with rare earths

(30) Priorité: 06.04.1993 FR 9304292
(43) Date de publication de la demande: 12.10.1994
(73) Titulaire: RHONE-POULENC AGRO, 69009 Lyon (FR)
(72) Inventeur: Bazin, Michelle, F-45480 Outarville (FR); Levaire, Willy, F-60123 Bonneuil en Valois (FR); Riglet, Georges, F-91330 Yerres (FR)
(74) Mandataire: Chrétien, François

(56) Documents cités:
- EP-A- 0 377 370
- FR-A- 2 320 555
- 1988 ANIMAL SCIENCE RESEARCH REPORT, AGRICULTURAL EXPERIMENT STATION, OKLAHOMA STATE UNIVERSITY, Juin 1988, OKLAHOMA, US pages 194 - 199 B.E. DORAN ET AL. 'Ytterbium labeling of grain: effect of grain processing, particle size and extraction method'
- DATABASE WPI Section Ch, Week 9240, Derwent Publications Ltd., London, GB; Class C07, AN 92-323797 [40] & CN-A-10 158 127 (AGRIC. RACLAMATION SCI. INST.) 29 Janvier 1992 & CHINESE PATENTS ABS European Patent Office AN 4028126
- THE JOURNAL OF NUTRITION, vol.109, no.4, Avril 1979, BETHESDA, MARYLAND (US) pages 702 - 707 D.P. HUTCHESON ET AL. 'Lanthanide markers in a single sample for nutrient studies in humans'
- JOURNAL OF AGRICULTURAL SCIENCE, vol.114, Janvier 1990, CAMBRIDGE, GB pages 69 - 77 I. ORTIGUES ET AL. 'A comparison between ytterbium acetate, ruthenium phenanthroline and indigestible acid detergent fibre in a double-marker system for intestinal flow measurements in steers'

## Description

La présente invention a pour objet des semences marquées par des terres rares selon la revendication 1, un procédé pour les obtenir ainsi que leur mode d'utilisation.

Le souci croissant de qualité dans le domaine de la commercialisation des semences requiert de nouveaux moyens de contrôle de la qualité mais aussi de la provenance. Certes il y a déjà des moyens comme le contrôle visuel de l'aspect, de la qualité de l'enrobage ou du pelliculage, ou encore par microscopie mais ces moyens deviennent insuffisants dans le cas de semences d'origines différentes et ayant subi des traitements de même nature. Enfin les semences commercialisées peuvent révéler des défauts au cours de leur utilisation pendant et après le semis et il est important pour le producteur de pouvoir traiter rapidement d'éventuelles réclamations en retrouvant les références des lots incriminés afin de découvrir la cause du défaut et ensuite y remédier.

L'invention a donc pour but des semences présentant des qualités intrinsèques de contrôlabilité très améliorées par rapport aux semences du commerce, par incorporation de terres rares.

L'invention a donc pour objet des semences naturelles ou artificielles, destinées au semis et traitées, caractérisées en qu'elles contiennent une quantité non phytotoxique de marquage, décelable par analyse, d'une combinaison d'au moins deux terres rares dans un rapport de concentration significativement différent.

Par "terre rare" au sens de l'invention, on entend le Lanthane, l'Yttrium ou un élément de la famille des Lanthanides. De préférence, en raison de leur absence de phytotoxicité et/ou de leur facilité de détection on utilisera des terres rares choisies dans le groupe comprenant le Néodyme, le Terbium, l'Europium, le Lanthane, le Samarium, le Lutécium et l'Ytterbium.

A titre d'exemples préférés, on peut citer les combinaisons binaires de chacune de ces terres rares ainsi que les combinaisons ternaires comme par exemple, les combinaisons "Néodyme / Lutécium / Europium", "Lanthane / Terbium / Samarium", "Ytterbium / Terbium / Samarium" et "Lanthane / Samarium / Ytterbium".

On peut utiliser des associations de plus de trois terres rares mais il est bien clair que la multiplicité des terres rares employées entraîne rapidement des inconvénients en raison du coût des mesures.

Par "significativement différent" au sens de l'invention, on entend un rapport de concentration différent d'un facteur d'au moins 2 et de préférence dans un rapport compris entre 2 et 100, de celui qu'on trouve naturellement dans le sol.

Par "non phytotoxique", au sens de l'invention, on entend une quantité qui ne détruit pas la semence ni produit un effet d'inhibition de sa germination.

De manière habituelle, la quantité de chaque terre rare métal est de 0,1 à 1000 ppm, plus particulièrement de 0,1 à 100 ppm en poids par rapport à la semence.

Les semences selon l'invention peuvent se présenter sous forme de semences naturelles ou artificielles, telles que plus généralement tous les moyens de propagation végétale comme par exemple des embryons somatiques ou explants. Les semences ainsi définies peuvent être d'espèces très variées comme par exemple les grandes cultures telles que les céréales, le maïs, tournesol, pois, coton, colza, soja, les cultures potagères et florales, ou encore les espèces arboricoles.

L'invention concerne également les plantes obtenues à partir des semences ci-dessus.

La présente invention a également pour objet un procédé d'obtention de semences telles que définies ci-dessus, caractérisé en ce qu'on traite des semences avec une composition contenant au moins deux terres rares. Cette composition de traitement peut se présenter sous diverses formes, par exemple bouillie ou poudre, ou formulation d'enrobage ou de pelliculage ou de traitement de pré-germination.

De préférence la composition de traitement contient en outre au moins une matière active agrochimique. Par matière agrochimique on entend notamment une matière active insecticide, fongicide ou régulatrice de croissance.

L'application de cette composition peut être effectuée à l'aide de tous dispositifs et techniques connus en traitement de semences par les compositions telles que décrites ci-dessus, par exemple les turbines d'enrobage ou de pelliculage ou des techniques de lit fluidisé ou encore de traitement en continu, par exemple dans des auges dans lesquelles les semences sont entraînées par des vis hélicoïdales, par exemple sous forme de brosses.

L'invention a encore pour objet un procédé pour l'identification de l'origine et de la date du traitement de semences qui consiste, dans une première étape à apporter sur la semence au moins deux terres rares, puis à analyser les térres rares dans le résidu de la semence. De préférence, l'analyse est effectuée après le semis et en particulier après la levée de la semence.

L'analyse des teneurs en terres rares dans les semences est réalisée par tout procédé approprié et en particulier par activation neutronique. Cette technique nucléaire connue (cf. Serge May, monographie "Techniques de l'ingénieur", p 2565, vol 1, 1986) est basée sur l'identification et quantification par spectrométrie gamma des radioéléments formés par réaction de capture neutronique (activation neutronique) à partir des éléments recherchés dans l'échantillon à analyser. Sa spécificité tient dans ce qu'elle ne nécessite pas de préparation chimique de l'échantillon (analyse directe) et qu'elle est extrêmement sensible.

Le conditionnement des échantillons est effectué par prélèvement et pesée, dans des flacons d'irradiation en polyéthylène, des semences ou résidus de semences après séparation des racines et parties aériennes des plantes. Les flacons ainsi préparés sont joints à des flacons contenant des étalons des éléments à analyser (aliquotes de solutions étalons) plus un sol international de référence (ref : soil 7, fournisseur IAEA) et un échantillon du sol de culture correspondant, pour former une navette d'irradiation. Cette navette est ensuite envoyée pour irradiation dans un flux de neutrons thermiques de 4 x 10¹³ neutrons/cm² pendant 7 heures dans le réacteur "Orphée" du Centre d'Études nucléaires de Saclay (France).

L'analyse des radio-isotopes est réalisée par spectrométrie gamma de haute résolution (détecteur GeHP 18% d'efficacité) à l'aide d'un logiciel de spectrométrie DGBAMMA développé par la société Canberra France. Le temps de refroidissement des échantillons, après la sortie du réacteur et avant comptage, dépend de la période du radio-isotope analysé : de 7 jours pour Lanthane et Samarium à 15 jours pour Néodyme, Europium, Terbium, Ytterbium, Lutécium.

Les résultats bruts, activités exprimées en Becquerels, des radioéléments analysés par semence, sont ensuite exprimés en concentration massique de l'élément correspondant, par comparaison aux étalons irradiés simultanément. La discrimination entré les semences marquées et non marquées s'effectue par examen des rapports des deux ou trois terres rares sélectionnées pour la clef d'identification, en les comparant avec le rapport théorique introduit dans la semence et le rapport dans le sol de référence.

Les exemples suivants sont donnés à titre indicatif pour illustrer l'invention.

### EXEMPLE 1 :

On traite, pendant 20 secondes, dans un bol à disque tournant HEGE 11 de capacité de traitement de 2 kg, 1 kg de semences de blé avec une bouillie aqueuse, à raison de 12 ml par kg de semences, ayant la composition suivante, pour 1 kg de semences :

| | |
|---|---|
| Carboxyméthylcellulose de sodium | 0,1g |
| colorant rouge Colour Index Rouge 112 | 0,09 g |
| formulation commerciale de Germinate double liquide à base d'un mélange d'oxyquinoléate de cuivre (fongicide) (150g/l) et d'anthraquinone (répulsif corbeaux) (250g/1) | 2 ml |
| La₂O₃ | 0,005 g |
| Tb₄O₇ | 0,001g |

Les semences traitées et non traitées sont semées au champ. On effectue des prélèvements de semences respectivement de semences cultivées marquées et non marquées, au bout de 4 semaines puis on mesure les rapports entre les concentrations en terres rares selon le protocole indiqué ci-dessus, respectivement sur :
- des semences non cultivées et non marquées,
- des semences non cultivées et marquées,
- des semences cultivées pendant 4 semaines et non marquées,
- des semences cultivées pendant 4 semaines et marquées.

Dans ces conditions on observe les rapports pondéraux de Lanthane/Terbium (La/Tb) suivants :

| **Type de semences** | **Rapport La/Tb** |
|---|---|
| semences non cultivées et non marquées | non détecté |
| semences non cultivées et marquées | 4 |
| semences cultivées 4 semaines et non marquées | 40 |
| semences cultivées 4 semaines et marquées | 6 |
| rapport théorique introduit dans la formulation | 5 |
| rapport sur sol de référence | 46 |

### EXEMPLE 2

On traite, pendant 30 secondes, dans un bol à disque tournant HEGE 11, de capacité de traitement 2 kg, 1 kg de semences de maïs par apport d'une bouillie aqueuse, à raison de 25 ml par kg de semences, ayant la composition suivante, pour 1 kg de semences :

| | |
|---|---|
| Carboxyméthylcellulose de sodium | 0,2 g |
| formulation commerciale de Cormaison TFL ECO à base d'un mélange de thirame (fongicide) (320g/1) et d'anthraquinone (répulsif corbeaux) (200g/1) | 5 ml |
| formulation commerciale de Gaucho à 70% d'imidaclopride (insecticide) | 7 g |
| Sm₂O₃ | 0,00025 g |
| La₂O₃ | 0,005 g |
| Tb₄O₇ | 0,001g |

Les semences traitées sont semées comme à l'exemple précédent. On effectue des prélèvements de semences respectivement de semences cultivées marquées et non marquées, au bout de 8 semaines. On mesures les rapports entre les concentrations en terres rares comme à l'exemple précédent.

Dans ces conditions on observe les rapports pondéraux binaires de Samarium/Lanthane/Terbium (Sm/La/Tb) consignés dans le tableau suivant :

| **type de semences** | **rapport La/Tb** | **rapport Sm/Tb** | **rapport Sm/La** |
|---|---|---|---|
| semences non cultivées et non marquées | non détecté | non détecté | non détecté |
| semences non cultivées et marquées | 5 | 0,26 | 0,05 |
| semences cultivées 8 semaines et non marquées | 41 | 7.1 | 0,17 |
| semences cultivées 8 semaines et marquées | 7 | 0,57 | 008 |
| rapport théorique introduit par la formulation | 5 | 0,25 | 0,05 |
| rapport sur sol de référence | 46 | 8,5 | 0,18 |

Ces résultats montrent clairement que les rapports de concentrations de terres rares se conservent bien entre le moment où la combinaison de rares rares est introduite et celui où elle est mesurée; de plus de par le choix de combinaisons de rapport significativement distinct de ceux des combinaisons des mêmes terres rares dans le sol, on est sûr de l'effet de traçage recherché.

## Revendications

1. Semences naturelles ou artificielles destinées au semis et traitées, caractérisées en ce qu'elles contiennent une quantité non phytotoxique de marquage, décelable par analyse, d'une combinaison d'au moins deux terres rares, dans un rapport de concentration significativement différent de ceux qu'on trouve naturellement dans le sol, la quantité de terres rares, exprimée en poids de métal, étant de 0,1 à 1000 ppm, et de préférence de 0,1 à 100 ppm, en poids par rapport à la semence.

2. Semences selon la revendication 1, caractérisée en ce que le rapport de concentration est différent d'un facteur d'au moins 2 par rapport à celui qu'on trouve naturellement dans le sol.

3. Semences selon la revendication 2, caractérisée en ce que le rapport de concentration est différent d'un facteur compris entre 2 et 100, par rapport à celui qu'on trouve naturellement dans le sol.

4. Semences selon l'une des revendications 1 à 3, caractérisées en ce qu'elles contiennent deux terres rares.

5. Semences selon l'une des revendications 1 à 3, caractérisées en ce qu'elles contiennent trois terres rares.

6. Semences selon l'une des revendications 1 à 5, caractérisées en ce que les terres rares sont choisies dans le groupe comprenant le Néodyme, le Terbium, l'Europium, le Lanthane, le Samarium, le Lutécium, l'Yttrium et l'Ytterbium.

7. Semences selon l'une des revendications 1 à 6, caractérisées en ce que le traitement est un traitement avec une bouillie ou une poudre.

8. Semences selon l'une des revendications 1 à 6, caractérisées en ce que le traitement est un enrobage.

9. Semences selon l'une des revendications 1 à 6, caractérisées en ce que le traitement est un pelliculage.

10. Semences selon l'une des revendications 1 à 6, caractérisées en ce que le traitement est un traitement de pré-germination.

11. Semences selon l'une des revendications 1 à 10, caractérisées en ce qu'elles sont des semences de céréales.

12. Semences selon l'une des revendications 1 à 10, caractérisée en ce qu'elles sont des semences de maïs.

13. Semences selon l'une des revendications 1 à 10, caractérisée en ce qu'elles sont des semences de tournesol.

14. Procédé d'obtention de semences selon l'une des revendications 1 à 9, caractérisé en ce qu'on traite des semences avec une bouillie ou une poudre, ou une formulation d'enrobage, de pelliculage ou de traitement de pré-germination contenant une combinaison d'au moins deux terres rares, la quantité de terres rares, exprimée en poids de métal par rapport à la semence, étant telle que définie dans la revendication 1.

15. Procédé de préparation de plantes, caractérisé en ce que les dites plantes résultent de la germination ou propagation des semences obtenues selon le procédé de la revendication 14.

16. Procédé d'obtention de semences selon la revendication 14, caractérisé en ce que la formulation contient en outre au moins une matière active agrochimique.

17. Procédé pour l'identification de l'origine et de la date traitement de semences naturelles ou artificielles pour semis et traitées, qui consiste :
- à apporter sur la semence une combinaison d'au moins deux terres rares, dont la quantité, exprimée en poids de métal par rapport à la semence, est telle que définie dans la revendication 1,
- et à analyser le rapport de concentration de ces terres rares dans le résidu de la semence.

18. Procédé selon la revendication 17, caractérisé en ce que l'analyse est effectuée après la levée de la semence.

19. Procédé selon l'une des revendications 17 et 18, caractérisé en ce que, entre le traitement et l'analyse, la semence est semée.

20. Procédé selon l'une des revendications 17 à 19, caractérisé en ce qu'on apporte deux terres rares.

21. Procédé selon l'une des revendications 17 à 19, caractérisé en ce qu'on apporte trois terres rares.

22. Composition pour le traitement de semences naturelles ou artificielles pour semis et traitées, caractérisée en ce qu'elle contient une quantité non phytotoxique de marquage, décelable par analyse, d'une combinaison d'au moins deux terres rares, dans un rapport de concentration significativement différent de ceux qu'on trouve naturellement dans le sol, la quantité de terres rares, exprimée en poids de métal par rapport à la semence, est telle que définie dans la revendication 1.

23. Composition selon la revendication 22, caractérisée en ce qu'elle contient en outre au moins une matière active agrochimique.

## Claims

1. Natural or artificial seeds intended for sowing and treated, characterized in that they contain a nonphytotoxic labelling quantity, detectable by analysis, of a combination of at least two rare earths, in a concentration ratio which is significantly different from those found naturally in the soil, the quantity of rare earths, expressed as weight of metal, being from 0.1 to 1000 ppm, and preferably from 0.1 to 100 ppm, by weight relative to the seed.

2. Seeds according to Claim 1, characterized in that the concentration ratio differs by a factor of at least 2 in relation to that found naturally in the soil.

3. Seeds according to Claim 2, characterized in that the concentration ratio differs by a factor of between 2 and 100 in relation to that found naturally in the soil.

4. Seeds according to one of Claims 1 to 3, characterized in that they contain two rare earths.

5. Seeds according to one of Claims 1 to 3, characterized in that they contain three rare earths.

6. Seeds according to one of Claims 1 to 5, characterized in that the rare earths are chosen from the group including neodymium, terbium, europium, lanthanum, samarium, lutetium, yttrium and ytterbium.

7. Seeds according to one of Claims 1 to 6, characterized in that the treatment is a treatment with a spraying mixture or a powder.

8. Seeds according to one of Claims 1 to 6, characterized in that the treatment is a coating.

9. Seeds according to one of Claims 1 to 6, characterized in that the treatment is a dressing.

10. Seeds according to one of Claims 1 to 6, characterized in that the treatment is a pregermination treatment.

11. Seeds according to one of Claims 1 to 10, characterized in that they are cereal seeds.

12. Seeds according to one of Claims 1 to 10, characterized in that they are maize seeds.

13. Seeds according to one of Claims 1 to 10, characterized in that they are sunflower seeds.

14. Process for obtaining seeds according to one of Claims 1 to 9, characterized in that seeds are treated with a spraying mixture or a powder or a coating, dressing or pregermination treatment formulation containing a combination of at least two rare earths, the quantity of rare earths, expressed as weight of metal relative to the seed, being as defined in Claim 1.

15. Process for preparing plants, characterized in that the said plants result from the germination or propagation of the seeds obtained according to the process of Claim 14.

16. Process for obtaining seeds according to Claim 14, characterized in that the formulation additionally contains at least one agrochemical active substance.

17. Process for the identification of the source and the date of treatment of natural or artificial seeds for sowing and treated, which consists:
- in introducing a combination of at least two rare earths on to the seed, the quantity of which, expressed as weight of metal relative to the seed, is as defined in Claim 1,
- and in analysing the concentration ratio of these rare earths in the seed residue.

18. Process according to Claim 17, characterized in that the analysis is performed after the seed has sprouted.

19. Process according to either of Claims 17 and 18, characterized in that, between the treatment and the analysis, the seed is sown.

20. Process according to one of Claims 17 to 19, characterized in that two rare earths are introduced.

21. Process according to one of Claims 17 to 19, characterized in that three rare earths are introduced.

22. Composition for the treatment of natural or artificial seeds for sowing and treated, characterized in that it contains a nonphytotoxic labelling quantity, detectable by analysis, of a combination of at least two rare earths, in a concentration ratio which is significantly different from those found naturally in the soil, the quantity of rare earths, expressed as weight of metal relative to the seed, being as defined in Claim 1.

23. Composition according to Claim 22, characterized in that it additionally contains at least one agrochemical active substance.

## Patentansprüche

1. Natürliche oder künstliche Samen, die für die Aussaat bestimmt und behandelt sind, dadurch gekennzeichnet, daß sie eine durch Analyse nachweisbare, nicht-phytotoxische, als Markierung dienende Menge einer Kombination von mindestens zwei seltenen Erden in einem Konzentrationsverhältnis, das sich signifikant von jenen, die man natürlicherweise in der Erde findet, unterscheidet, enthalten, wobei die Menge an seltenen Erden, ausgedrückt in Gewicht an Metall, 0,1 bis 1000 ppm und vorzugsweise 0,1 bis 100 ppm bezogen auf das Gewicht des Saatguts betragt.

2. Samen nach Anspruch 1, dadurch gekennzeichnet, daß sich das Konzentrationsverhältnis um einen Faktor von mindestens 2 von jenem, das man natürlicherweise in der Erde findet, unterscheidet.

3. Samen nach Anspruch 2, dadurch gekennzeichnet, daß sich das Konzentrationsverhältnis um einen Faktor zwischen 2 und 100 von jenem, das man natürlicherweise in der Erde findet, unterscheidet.

4. Samen nach einem der Ansprüche 1 bis 3, dadurch gekennzeichnet, daß sie zwei seltene Erde enthalten.

5. Samen nach einem der Ansprüche 1 bis 3, dadurch gekennzeichnet, daß sie drei seltene Erden enthalten.

6. Samen nach einem der Ansprüche 1 bis 5, dadurch gekennzeichnet, daß die seltenen Erden ausgewählt sind aus der Gruppe, umfassend Neodym, Terbium, Europium, Lanthan, Samarium, Lutetium, Yttrium und Ytterbium.

7. Samen nach einem der Ansprüche 1 bis 6, dadurch gekennzeichnet, daß die Behandlung eine Behandlung mit einem Schlicker oder einem Pulver ist.

8. Samen nach einem der Ansprüche 1 bis 6, dadurch gekennzeichnet, daß die Behandlung eine Umhüllung ist.

9. Samen nach einem der Ansprüche 1 bis 6, dadurch gekennzeichnet, daß die Behandlung ein Überziehen mit einem dünnen Überzug ist.

10. Samen nach einem der Ansprüche 1 bis 6, dadurch gekennzeichnet, daß die Behandlung eine Vorkeimungsbehandlung ist.

11. Samen nach einem der Ansprüche 1 bis 10, dadurch gekennzeichnet, daß sie Getreidesamen sind.

12. Samen nach einem der Ansprüche 1 bis 10, dadurch gekennzeichnet, daß sie Maissamen sind.

13. Samen nach einem der Ansprüche 1 bis 10, dadurch gekennzeichnet, daß sie Sonnenblumensamen sind.

14. Verfahren zur Gewinnung von Samen nach einem der Ansprüche 1 bis 9, dadurch gekennzeichnet, daß man Samen mit einem Schlicker oder einem Pulver oder einer Umhüllungsformulierung, einer Formulierung zum Überziehen mit einem dünnen Überzug oder einer Formulierung zur Vorkeimungsbehandlung, die eine Kombination von mindestens zwei seltenen Erden enthalten, behandelt, wobei die Menge an seltenen Erden, ausgedrückt in Gewicht an Metall bezogen auf das Saatgut, so wie in Anspruch 1 definiert ist.

15. Verfahren zur Herstellung von Pflanzen, dadurch gekennzeichnet, daß die Pflanzen aus der Keimung oder Vermehrung von Samen, die gemäß dem Verfahren von Anspruch 14 erhalten worden sind, resultieren.

16. Verfahren zur Gewinnung von Samen nach Anspruch 14, dadurch gekennzeichnet, daß die Formulierung darüber hinaus mindestens einen agrochemischen Wirkstoff enthält.

17. Verfahren zur Identifizierung der Herkunft und des Behandlungsdatums von natürlichen oder künstlichen Samen für die Aussat, die behandelt worden sind, das darin besteht:
- auf das Saatgut eine Kombination von mindestens zwei seltenen Erden aufzubringen, deren Menge, ausgedrückt in Gewicht an Metall bezogen auf das Saatgut, so wie in Anspruch 1 definiert ist,
- und das Konzentrationsverhältnis dieser seltenen Erden in dem Rückstand des Saatguts zu analysieren.

18. Verfahren nach Anspruch 17, dadurch gekennzeichnet, daß die Analyse nach dem Keimen des Saatguts vorgenommen wird.

19. Verfahren nach einem der Ansprüche 17 und 18, dadurch gekennzeichnet, daß zwischen der Behandlung und der Analyse das Saatgut ausgesät wird.

20. Verfahren nach einem der Ansprüche 17 bis 19, dadurch gekennzeichnet, daß man zwei seltene Erden aufbringt.

21. Verfahren nach einem der Ansprüche 17 bis 19, dadurch gekennzeichnet, daß man drei seltene Erden aufbringt.

22. Zusammensetzung für die Behandlung von behandelten natürlichen oder künstlichen Samen für die Aussaat, dadurch gekennzeichnet, daß sie eine durch Analyse nachweisbare, nicht-phytotoxische, als Markierung dienende Menge einer Kombination von mindestens zwei seltenen Erden in einem Konzentrationsverhältnis, das sich signifikant von jenen, die man natürlicherweise in der Erde findet, unterscheidet, enthält, wobei die Menge an seltenen Erden, ausgedrückt in Gewicht an Metall bezogen auf das Saatgut, so wie in Anspruch 1 definiert ist.

23. Zusammensetzung nach Anspruch 22, dadurch gekennzeichnet, daß sie darüber hinaus mindestens einen agrochemischen Wirkstoff enthält.
